# EUROPÄISCHE PATENTSCHRIFT

(11) **EP 1 120 632 B1**
(45) Veröffentlichungstag und Bekanntmachung des Hinweises auf die Patenterteilung: **21.08.2002**
(21) Anmeldenummer: 00101352.3
(22) Anmeldetag: 24.01.2000
(51) Int. Cl.: G01C 21/34, H04Q 7/38

(54) **Verfahren zur zielorientierten Personenführung**
Goal directed method for guiding persons
Procédé de guidage de personnes vers une destination

(43) Veröffentlichungstag der Anmeldung: 01.08.2001
(73) Patentinhaber: SCHEIDT & BACHMANN GMBH, D-41238 Mönchengladbach (DE)
(72) Erfinder: Miller, Norbert Dr., 41063 Mönchengladbach (DE)
(74) Vertreter: Stenger, Watzke & Ring Patentanwälte

(56) Entgegenhaltungen:
- EP-A- 0 869 466
- DE-A- 19 531 824
- DE-A- 19 621 424
- DE-A- 19 852 860
- HELLAKER J ET AL: "REAL-TIME TRAVELLER INFORMATION - IN EVERYONE'S POCKET?Ü Ö- A PILOT TEST USING HAND-PORTABLE GSM TERMINALS" PROCEEDINGS OF THE VEHICLE NAVIGATION AND INFORMATIONS SYSTEMS CONFERENCE,US,NEW YORK, IEEE, Bd. -, 12. Oktober 1993 (1993-10-12), Seiten 49-52, XP000448510

## Beschreibung

Die Erfindung betrifft ein Verfahren zur zielorientierten Personenführung unter Nutzung eines Mobilfunksystems.

Derartige Verfahren sind aus dem Stand der Technik bekannt und werden beispielsweise unter Zuhilfenahme sogenannter Navigationssysteme in Kraftfahrzeugen durchgeführt. Hierbei wird nach Vorgabe des gewünschten Zielorts unter Verwendung von in digitaler Form vorliegenden Straßenkarten ein Weg zwischen momentaner Ist-Position und vorgebbarer Ziel-Position ermittelt. Die in digitaler Form vorliegenden Straßenkarten werden dem System in der Regel unter Zuhilfenahme entsprechender CD-Roms zugeführt, wobei vor einer Benutzung des Navigationssystems die CD-Rom in dafür vorgesehene Lesegeräte einzulegen sind. Die Festlegung der Ist-Position kann entweder manuell oder satellitengesteuert durchgeführt werden, wobei insbesondere die satellitengesteuerte Festlegung der Ist-Position eine exakte zielorientierte Personenführung zuläßt. Die manuelle' Eingabe der Ist-Position ist zumeist ungenau und führt im Zuge der Verfahrensanwendung zu Fehlern.

Sämtlichen vorbekannten Verfahren ist gemein, daß sie typischerweise unter Verwendung kraftfahrzeugbezogener Einrichtungen durchführbar sind. Des weiteren ist von Nachteil, daß sich aufgrund ständig ändernder Straßenverläufe infolge von Baumaßnahmen eine fehlerfreie Personenführung nur dann durchführen läßt, wenn die in digitaler Form z. B. auf CD-Roms zur Verfügung gestellten Straßenkarten stetig aktualisiert werden. Dies ist zum einen aufwendig und nicht zuletzt kostenintensiv.

Ferner ist von Nachteil, daß der Einbau vorbekannter Navigationssysteme in Kraftfahrzeugen sehr aufwendig ist und nur durch Fachpersonal durchgeführt werden kann. Zudem ist die Rechnereinheit vorbekannter Navigationssysteme aufgrund der Tatsache, daß unter Zugrundelegung digitaler Straßenpläne zur Wegermittlung eine erhebliche Datenmenge zu verarbeiten ist, in der Regel integraler Bestandteil des Kraftfahrzeugs, was einen erheblichen Aufwand im Austauschfall zur Folge hat. Der einfache Ausbau und die Weiterverwendung eines Navigationssystems in einem anderen Kraftfahrzeug ist daher nicht möglich.

Aus dem Dokument DE-A-196 21 424 ist ein Verfahren sowie eine Vorrichtung zum Selektieren von Abfragedaten aus einer gespeicherten Datenmenge bekannt.

Hiervon ausgehend liegt der Erfindung die **Aufgabe** zugrunde, unter Vermeidung der aufgeführten Nachteile ein Verfahren zur zielorientierten Personenführung anzugeben, das unter Verwendung bestehender Mobilfunksysteme einfach durchzuführen ist und den Einsatz tragbarer sowie leicht zu bedienender Endgeräte ermöglicht.

Gelöst wird diese Aufgabe erfindungsgemäß durch ein Verfahren zur zielorientierten Personenführung unter Nutzung eines Mobilfunksystems, wobei mittels einer zentralen Rechnereinheit aus einer vorgegebenen Ist-Position und einem vorgegebenen Zielort unter Zugrundlegung der örtlichen infrastrukturellen Gegebenheiten ein Weg von der Ist-Position zum Zielort ermittelt, in richtungsweisende Symbole transformiert und aus einem Mobilfunkendgerät der zu führenden Person zur Anzeige gebracht wird.

Im Unterschied zum aus dem Stand der Technik Bekannten erfolgt die Ermittlung des Weges zwischen Ist-Position und Zielort bei dem erfindungsgemäßen Verfahren mittels einer zentralen Rechnereinheit, die benutzerunabhängig zur Verfügung steht und von einer Vielzahl unterschiedlicher Benutzer gleichzeitig in Benutzung genommen werden kann. Hierbei kann als zentrale Rechnereinheit beispielsweise ein Internet-/WAP-Server verwendet werden. In einfacher Weise wird über ein mobiles Funkendgerät durch die zu führende Person ein Kontakt mit der zentralen Rechnereinheit aufgebaut. Beispielsweise kann als mobiles Funkendgerät ein Mobiltelefon verwendet werden, wobei mittels einer durch Anruf eingeleiteten Telekommunikationsverbindung der Kontakt zwischen Rechnereinheit und Mobiltelefon hergestellt wird. Nach Vorgabe der Ist-Position sowie des Zielorts übermittelt die Rechnereinheit sodann unter Zugrundelegung der örtlichen infrastrukturellen Gegebenheiten den Weg zwischen Ist-Position und Zielvorgabe. Für eine Ausgabe des ermittelten Wegs werden von der zentralen Rechnereinheit richtungsweisende Symbole erzeugt, die auf einem Display des Mobilfunkendgeräts der zu führenden Person zur Anzeige gebracht werden. Auch kann die Ausgabe des ermittelten Wegs mittels Sprachausgabe erfolgen. Dies bietet sich insbesondere bei der Verwendung eines mobilen Telefons als Mobilfunkendgerät an.

Der für eine Richtungsvorgabe erforderliche Bewegungsvektor, d. h. derjenige Vektor, der die Richtung angibt, in die sich die zu führende Person bewegt, kann durch den einfachen Vergleich zweier Standortpositionen der zu führenden Person innerhalb eines kurzen Zeitintervalls ermittelt werden. Hierbei kann die Ermittlung sowohl durch die zentrale Rechnereinheit als auch durch das Mobilfunkendgerät erfolgen. Nicht zuletzt aufgrund der höheren Rechnergeschwindigkeit hat sich allerdings eine Standortpositionsbestimmung unter Verwendung der zentralen Rechnereinheit als vorteilhaft herausgestellt. Zu diesem Zweck werden die entsprechenden Standortinformationen dem zentralen Rechnersystem zur Richtungsvorgabenermittlung vom Mobilfunkendgerät zur Verfügung gestellt. Unter Verwendung bestehender Mobilfunksysteme ermöglicht es das erfindungsgemäße Verfahre mithin, zu führende Personen auf einfache Weise mit entsprechenden Informationen zu versorgen. Hierbei können mobile Endgeräte verwendet werden, so daß auf eine stationäre Installation etwaiger Systemkomponenten in vorteilhafter Weise verzichtet werden kann. Mithin kann das erfindungsgemäße Verfahren nicht nur als Navigationssystemersatz zur Verwendung in Kraftfahrzeugen angewandt werden, vielmehr ist auch der mobile Einsatz als Wegeleitsystem außerhalb des Kraftfahrzeuges, beispielsweise als Orientierungshilfe für Fußgänger in Großstädten, möglich.

Gemäß einem Merkmal der Erfindung erfolgt die Vorgabe der Ist-Position und/oder des Zielorts durch Eingabe ortsbestimmender Informationen unter Nutzung des Mobilfunkendgeräts. In vorteilhafter Weise kann somit der zentralen Rechnereinheit eine genaue Standortvorgabe bzw. ein gewünschter Zielort vorgegeben werden. Hiervon ausgehend kann die zentrale Rechnereinheit sodann den Weg zwischen Ist-Position und Zielort berechnen. Die Eingabe ortsbestimmender bzw. ortsdefinierender Informationen unter Nutzung des Mobilfunkendgerätes bietet dabei insbesondere den Vorteil, daß es keiner weiteren Zusatzgeräte bedarf und ein und dasselbe Endgerät sowohl für die Eingabe aller wesentlicher Informationen als auch für die Ausgabe der richtungsweisenden Symbole genutzt werden kann. Insbesondere eignet sich dabei als mobiles Funkendgerät ein mobiles Telefongerät, da dieses sowohl über entsprechende Möglichkeiten der ortsbestimmenden Informationseingabe als auch über ein Display zur Anzeige richtungsweisender Symbole verfügt. Gemäß einem Merkmal der Erfindung kann dabei die Eingabe ortsbestimmender bzw. ortsdefinierender Informationen mittels Voice-Mail, E-Mail undloder SMS, GSM, GPRS oder UMTS erfolgen. Die Eingabe ortsbestimmender Informationen mittels Voice-Mail ist insbesondere dann vorteilhaft, wenn nach einem Zustandekommen der Verbindung zwischen Mobilendfunkgerät und zentraler Rechnereinheit eine sofortige Übermittlung der ortsbestimmenden Informationen und einer Rücksendung des ermittelten Weges zwischen Ist-Position und Zielort erfolgen soll. Bei dieser Art der Informationsweitergabe kann der Benutzer nach einem Verbindungsaufbau zwischen Mobilfunkendgerät und zentraler Rechnereinheit seine Ist-Position sowie seinen Zielort durchgeben. Der Weg zwischen Ist-Position und Zielort wird von der zentralen Rechnereinheit bestimmt und der zu führenden Person unverzüglich mitgeteilt. Dies kann mittels Sprachausgabe oder visuell wahrnehmbarer optischer Symbole erfolgen. Erfolgt die Eingabe der ortsbestimmenden Informationen mittels E-Mail, so kann auf eine entsprechende Anfrage des Benutzers eine Rückantwort der zentralen Rechnereinheit zeitversetzt an das mobile Endfunkgerät gesandt und dort gespeichert werden. So kann beispielsweise in Kenntnis dessen, daß eine vom Benutzer zurückzulegende Wegstrecke für diesen noch unbekannt ist, frühzeitig eine entsprechende Anfrage an die zentrale Rechnereinheit gestellt werden, so daß eine entsprechende Weginformation bereits vorliegt, wenn die zu führende Person zur Erreichung des Zielorts von der Ist-Position startet. Als ortsbestimmende bzw. ortsdefinierende Informationen eignen sich zur Beschreibung sowohl der Ist-Position als auch des Zielorts einschlägig vorbekannte Informationen, wie beispielsweise Adressinformationen, Koordinatenangaben oder dergleichen. Wesentlich bei ortsbestimmenden Informationen ist lediglich, daß diese ein eindeutige Zuordnung von Ist-Position und Zielort zulassen. Ist beispielsweise der gewünschte Zielort über eine Telefonnummer identifizierbar, so kann die zentrale Rechnereinheit über entsprechende Telefonbucheinträge mittels vorgegebener Telefonnummer die Adresse des vorgegebenen Zielorts ermitteln und so einen Weg zwischen Zielort und Ist-Position berechnen.

Gemäß einem weiteren Merkmal der Erfindung kann die Vorgabe der Ist-Position unter Zugrundelegung der örtlichen infrastrukturellen Gegebenheiten mittels automatischer Mobilfunkendgerät-ldentifikation erfolgen. Dieses System bietet sich in vorteilhafter Weise insbesondere bei der Verwendung mobiler Telefone an. Aufgrund der Tatsache, daß jedes Mobiltelefon über eine zugeordnete Funkstelle (Base-Station) mit einer einmaligen Identifikationsnummer (Base-Station-ID) mit dem Telekommunikationsnetzwerk verbunden ist, kann der Standort des mobilen Telefons ermittelt und unter Zugrundelegung der örtlichen infrastrukturellen Gegebenheiten genau bestimmt werden. Vorteil hierbei ist, daß die zu führende Person die Ist-Position nicht manuell einzugeben und der zentralen Rechnereinheit mitzuteilen hat, sondern die Ist-Position automatisch erfaßt und zur Wegermittlung an die zentrale Rechnereinheit übersendet wird. Gemäß einem vorteilhaften Vorschlag der Erfindung kann hierbei zugleich eine Straßen- und/oder Landkarte der entsprechenden Örtlichkeit, an der sich der Benutzer aufhält, vom Mobilfunknetzanbieter an das mobile Telefon übertragen und zur Anzeige auf dem Display des mobilen Telefons gebracht werden. Hierdurch wird es nicht nur ermöglicht, unter Angabe infrastruktureller Gegebenheiten eine genaue Ist-Position an die zentrale Rechnereinheit zu übermitteln, auch wird der Benutzer in die Lage versetzt, seine vom System ermittelte Ist-Position über die Anzeige auf dem Display seines mobilen Telefons zu überprüfen und ggf. durch weitere Angaben zu konkretisieren oder, falls dies erforderlich sein sollte, zu korrigieren.

Gemäß einem weiteren Merkmal der Erfindung erfolgt die Ermittlung der Ist-Position mittels GPS. Diese satellitengestützte Positionsermittlung bietet den Vorteil der großen Genauigkeit, wobei die Positionsermittlung auf zwei unterschiedliche Wege vom Benutzer eingeleitet werden kann. Zum einem besteht die Möglichkeit, über ein separates, zweites Gerät eine Ist-Positionerfassung durchzuführen und zum anderen kann eine solche Ist-Positionsermittlung automatisch im Zuge der Anfrage an die zentrale Rechnereinheit erfolgen. Im ersten Fall ist ein separates zweites Gerät erforderlich, das vom Benutzer im Bedarfsfall zu aktivieren ist und dessen Ausgabeinformationen über das mobile Endfunkgerät an die zentrale Rechnereinheit weiterzuleiten sind. Im zweiten, alternativen Fall verfügt das Mobilendfunkgerät über eine integrierte GPS-Erfassungseinheit. Sobald eine Anfrage an die zentrale Rechnereinheit erfolgt, ermittelt diese Einheit die genaue Ist-Position und übersendet diese automatisch an die zentrale Rechnereinheit zur Wegermittlung.

Gemäß einem weiteren Merkmal der Erfindung werden die örtlichen infrastrukturellen Gegebenheiten zur Ermittlung eines Weges zwischen vorgegebener Ist-Position und vorgegebenem Zielort auf Basis aktueller Straßen- und/oder Landkarten berücksichtigt. Somit wird in vorteilhafter Weise sichergestellt, daß dem Anwender des erfindungsgemäßen Verfahrens Weginformationen zur Verfügung gestellt werden, die unter Zugrundelegung aktueller Straßen- und/oder Landkarten ermittelt wurden. Hierbei erfolgt in vorteilhafter Weise die Verwaltung und Aktualisierung der benötigten Straßen- und/oder Landkarten an zentraler Stelle und steht mithin jedem Verfahrensnutzer uneingeschränkt zur Verfügung, ohne daß dieser sich um eine Aktualisierung oder Verwaltung des Kartenmaterials selbst bemühen müßte.

Gemäß einem weiteren Merkmal der Erfindung erfolgt die Anzeige des ermittelten Wegs zwischen Ist-Position und Zielort über Richtungssymbol-Ketten und/oder Karten. Bei der Verwendung von Richtungssymbol-Ketten können beispielsweise richtungsanzeigende Symbole, wie beispielsweise Pfeile, verwendet werden, die hintereinander abgebildet den von der zentralen Rechnereinheit ermittelten Weg abbilden. Auch kann zur Orientierung des Benutzers eine Karte mit eingezeichnetem Weg auf dem Display des Mobilendfunkgerätes angezeigt werden. Neben diesen beiden beispielhaft dargelegten optischen Anzeigeeinrichtungen ist auch eine akustische Wegführung möglich. Dies bietet sich insbesondere bei der Verwendung eines mobilen Telefons an.

Gemäß einem weiteren Merkmal der Erfindung wird für einen Richtungsabgleich zwischen dem Mobilfunkendgerät der zu führenden Person und der zentralen Rechnereinheit ein Richtungsvektor in Form eines Kompasses von der zentralen Rechnereinheit an das Mobilendfunkgerät übertragen. Die Verwendung eines derartigen Kompasses ermöglicht in vorteilhafter Weise die Verwendung von Relativrichtungsangaben wie beispielsweise "links" oder "rechts". Sobald nach einem Verbindungsaufbau zwischen zentraler Rechnereinheit und Mobilendfunkgerät ein Abgleich über die genaue Standortposition durchgeführt wurde, beispielsweise durch die Übermittlung von Richtungsvektoren, können derartige relative Richtungsangaben wie "rechts" oder "links" verwendet werden, was insbesondere gegenüber der Verwendung von sonst notwendigerweise erforderlichen Nord-, Süd-, West- oder Ost-Richtungsangaben von Vorteil ist.

Gemäß einem weiteren Merkmal der Erfindung werden neben örtlichen auch zeitliche Gegebenheiten bei der Ermittlung des Weges zwischen Ist-Position und Zielort mit berücksichtigt. So können beispielsweise temporäre Störungen im Verkehrsfluß, wie beispielsweise Baustellen oder Stau, mit Berücksichtigung bei der Ermittlung des Weges finden. Auf diese Weise kann dem Zielsuchenden nicht nur die kürzeste Entfernung zwischen zwei Punkten, sondern auch die wahrscheinlichst weniger zeitaufwendigste Verbindung mitgeteilt werden.

Gemäß einem weiteren Merkmal der Erfindung wird für eine Standortüberprüfung eine Mehrfachüberprüfung durchgeführt. Eine solche Mehrfachüberprüfung ist insbesondere dann von Vorteil, wenn der ermittelte Weg ein sehr langer ist und es aufgrund von Fehlinterpretationen des Benutzers zu ungeplanten Wegänderungen kommen kann. In solchen Fällen kann durch eine Mehrfachüberprüfung verhindert werden, daß der Zielsuchende unnötige Umwege auf dem Weg zum Zielort vollführt.

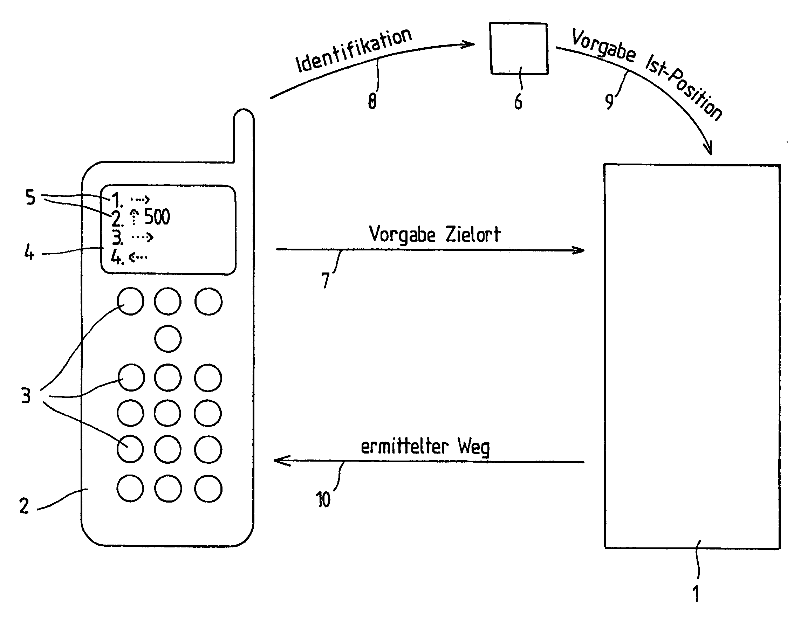

Weitere Vorteile und Merkmale der Erfindung ergeben sich aus der nachfolgenden Beschreibung anhand der zugehörigen Zeichnung. Dabei zeigt die Figur in schematischer Darstellung eine Kommunikation zwischen Mobilendfunkgerät und zentraler Rechnereinheit.

Dargestellt ist in der Figur ein Mobilendfunkgerät 2 in Form eines mobilen Telefons. Über eine herkömmliche Kommunikationsverbindung tritt das Mobilendfunkgerät 2 mit einer zentralen Rechnereinheit 1 in Verbindung. Der Zielsuchende kann beispielsweise über die Eingabetasten 3 des Mobilendfunkgerätes 2 oder aber über eine Voice-Mail Angaben zum gewünschten Zielort an die zentrale Rechnereinheit 1 übertragen. Symbolisch ist dies durch den vom Mobilendfunkgerät 2 zur zentralen Rechnereinheit 1 weisenden Pfeil 7 dargestellt. Gemäß dieses hier dargestellten Ausführungsbeispiels erfolgt die Ermittlung der Ist-Position des Zielsuchenden über den Mobilnetzfunkbetreiber. Hierbei wird durch wenigstens zwei Sendeeinheiten 6 unter Zugrundelegung des Identifizierungscodes des Mobilendfunkgerätes 2 die genaue Position des Benutzers ermittelt. Schematisch ist die Übermittlung des Identifzierungscodes durch den Pfeil 8 dargestellt. Die Vorgabe der Ist-Position zur zentralen Rechnereinheit 1 erfolgt gemäß des hier symbolisch dargestellten Pfeils 9. Dabei werden die ortsbestimmenden Informationen der Ist-Position von der Sendeeinheit 6 an die zentrale Rechnereinheit 1 übertragen.

Unter Zugrundelegen örtlicher, ggf. zeitlicher infrastrukturellen Gegebenheiten ermittelt die zentrale Rechnereinheit sodann auf Basis der vorgegebenen Ist-Position und des vorgegebenen Zielorts einen Weg zwischen Ist-Position und Zielort. Diese Informationen werden in richtungsweisende Symbole transformiert und dem Zielsuchenden übermittelt. Schematisch ist dies durch den Pfeil 10 dargestellt. Die Ausgabe der richtungsweisenden Symbole kann hierbei optisch wie auch akustisch erfolgen. Bei dem in der Figur dargestellten Ausführungsbeispiel erfolgt die Ausgabe mittels visuell wahrnehmbarer Richtungssymbole 5. Diese werden im Display 4 des Mobilfunkendgerätes 2 angezeigt. Beispielhaft dargestellt sind hier vier Zeilen, die mit 1, 2, 3 und 4 durchnumeriert sind. In der ersten Zeile ist ein nach rechts weisender Pfeil dargestellt. Die zweite Zeile weist einen nach geradeaus weisenden Pfeil auf. Diesem Pfeil ist für eine Strecke von 500 m zu folgen. Zeile 3 weist sodann einen nach rechts weisende Pfeil und Zeile 4 einen nach links weisenden Pfeil auf. Beispielhaft ergibt sich mithin eine Wegbeschreibung die wie folgt aussieht: Von der Ist-Position ausgehend nach rechts, 500 m geradeaus, dann rechts, sofort wieder links. Andere Darstellungsformen als die hier beispielhaft dargestellten sind denkbar. Um Richtungsverwechslungen bei der Verwendung von "rechts"- und "links"-Angaben zu vermeiden, ist nach einem Verbindungsaufbau zwischen Mobilendfunkgerät 1 und zentraler Rechnereinheit 1 ein digitaler Kompaß beispielsweise in Form eines Richtungsvektors zu übertragen. In vorteilhafter Weise kann so auf die umständliche Angabe von Himmelsrichtungen verzichtet und Relativangaben wie "rechts" und "links" verwendet werden.

Das hier dargestellte Ausführungsbeispiel dient der beispielhaften Erläuterung des erfindungsgemäßen Verfahrens und ist in keinster Weise einschränkend.

### Bezugszeichenliste

- 1: Rechnereinheit
- 2: Mobilfunkendgerät
- 3: Eingabetaste
- 4: Display
- 5: Richtungssymbole
- 6: Sendeeinheit
- 7: Pfeil
- 8: Pfeil
- 9: Pfeil
- 10: Pfeil

## Patentansprüche

1. Verfahren zur zielorientierten Personenführung unter Nutzung eines Mobilfunksystems, wobei mittels einer zentralen Rechnereinheit aus einer vorgegebenen Ist-Position und einem vorgegebenen Zielort unter Zugrundelegung der örtlichen infrastrukturellen Gegebenheiten ein Weg von der Ist-Position zum Zielort ermittelt, in richtungsweisende Symbole transformiert und auf einem Mobilfunkendgerät der zu führenden Person zur Anzeige gebracht wird.

2. Verfahren nach Anspruch 1, **dadurch gekennzeichnet, daß** die Vorgabe der Ist-Position und/oder des Zielorts durch Eingabe ortsbestimmender Informationen unter Nutzung des Mobilfunkendgerätes erfolgt.

3. Verfahren nach Anspruch 1, **dadurch gekennzeichnet, daß** die Vorgabe der Ist-Position unter Zugrundelegung der örtlichen infrastrukturellen Gegebenheiten mittels automatischer Mobilfunkbase-Station-Identifikation erfolgt.

4. Verfahren nach Anspruch 1, **dadurch gekennzeichnet, daß** die Vorgabe der Ist-Position mittels GPS erfolgt.

5. Verfahren nach einem der vorhergehenden Ansprüche, **dadurch gekennzeichnet, daß** die örtlichen infrastrukturellen Gegebenheiten auf Basis aktueller Straßen- und/oder Landkarten berücksichtigt werden.

6. Verfahren nach einem der vorhergehenden Ansprüche, **dadurch gekennzeichnet, daß** die Anzeige des ermittelten Wegs zwischen Ist-Position und Zielort über Richtungssymbol-Ketten und/oder Karten erfolgt

7. Verfahren nach einem der vorhergehenden Ansprüche, **dadurch gekennzeichnet, daß** für einen Richtungsabgleich zwischen dem Mobilfunkendgerät der zu führende Person und der zentralen Rechnereinheit ein Richtungsvektor in Form eines Kompasses von der zentralen Rechnereinheit an das Mobilfunkendgerät übertragen wird.

8. Verfahren nach einem der vorhergehenden Ansprüche, **dadurch gekennzeichnet, daß** neben örtlichen auch zeitliche Gegebenheiten bei der Ermittlung des Weges zwischen Ist-Position und Zielort mit berücksichtigt werden.

9. Verfahren nach einem der vorhergehenden Ansprüche, **dadurch gekennzeichnet, daß** für eine Standortüberprüfung eine Mehrfachüberprüfung durchgeführt wird.

## Claims

1. Method for the destination-oriented guidance of individuals by using a mobile radio system, in which a path from the actual position to the destination is determined from a predetermined actual position and a predetermined destination on the basis of the local infrastructures by means of a central computer unit, transformed into direction-pointing symbols and displayed on a mobile radio terminal of the individual to be guided.

2. Method according to Claim 1, **characterized in that** the actual position and/or the destination is/are input by inputting location-determining information by using the mobile radio terminal.

3. Method according to Claim 1, **characterized in that** the actual position is input on the basis of the local infrastructures by means of automatic mobile radio base station identification.

4. Method according to Claim 1, **characterized in that** the actual position is input by means of GPS.

5. Method according to one of the preceding claims, **characterized in that** the local infrastructures are taken into consideration on the basis of current road maps and/or maps.

6. Method according to one of the preceding claims, **characterized in that** the path found between the actual position and the destination is indicated via chains of direction symbols and/or maps.

7. Method according to one of the preceding claims, **characterized in that** for calibrating direction between the mobile radio terminal of the individual to be guided and the central computer unit, a direction vector in the form of a compass is transmitted from the central computer unit to the mobile radio terminal.

8. Method according to one of the preceding claims, **characterized in that**, apart from local situations, temporal situations are also taken into consideration in the determination of the path between the actual position and the destination.

9. Method according to one of the preceding claims, **characterized in that** a multiple check is performed for a site check.

## Revendications

1. Procédé pour le guidage des personnes vers une destination avec utilisation d'un système radio-téléphonique mobile, moyennant quoi, à l'aide d'une unité centrale d'ordinateur, à partir d'une position réelle prédéterminée et d'un lieu de destination prédéterminé, sur la base des conditions infrastructurelles locales, un trajet est déterminé entre la position réelle et le lieu de destination, transformé en symboles directionnels et indiqué à la personne à guider à partir d'un terminal radio-téléphonique mobile.

2. Procédé selon la revendication 1, **caractérisé en ce que** la prédétermination de la position réelle et/ou du lieu de destination se fait par l'entrée d'informations déterminant la destination à l'aide d'un système radio-téléphonique mobile.

3. Procédé selon la revendication 1, **caractérisé en ce que** la prédétermination de la position réelle se fait sur la base des conditions infrastructurelles locales par l'identification automatique de la station radio-téléphonique.

4. Procédé selon la revendication 1, **caractérisé en ce que** la prédétermination de la position réelle se fait à l'aide d'un GPS.

5. Procédé selon l'une des revendications précédentes, **caractérisé en ce que** les conditions infrastructurelles locales sont prises en compte sur la base de cartes routières et/ou géographiques actuelles.

6. Procédé selon l'une des revendications précédentes, **caractérisé en ce que** l'affichage du trajet déterminé entre la position réelle et le lieu de destination se fait à l'aide de chaînes de symboles directionnels et/ou de cartes.

7. Procédé selon l'une des revendications précédentes, **caractérisé en ce qu'**un vecteur directionnel sous forme d'un compas est transmis par l'unité centrale d'ordinateur au terminal radio-téléphonique mobile pour un alignement directionnel entre le terminal radio-téléphonique mobile de la personne à guider et l'unité centrale d'ordinateur.

8. Procédé selon l'une des revendications précédentes, **caractérisé en ce qu'**on tient compte, en plus des conditions locales, également des conditions temporelles pour la détermination du trajet entre la position réelle et le lieu de destination.

9. Procédé selon l'une des revendications précédentes, **caractérisé en ce qu'**une vérification multiple est réalisée pour la vérification de la position.
